# EUROPÄISCHE PATENTSCHRIFT

(11) **EP 0 504 498 B1**
(45) Veröffentlichungstag und Bekanntmachung des Hinweises auf die Patenterteilung: **15.03.1995**
(21) Anmeldenummer: 91200347.2
(22) Anmeldetag: 19.02.1991
(51) Int. Cl.: B01D 47/00, C02F 1/28

(54) **Verfahren und Vorrichtung zur Regenerierung der Waschflüssigkeit eines Luftwäschers**
Process and device for the regeneration of the washing liquid of air scrubbers
Procédé et dispositif de régénération de liquide de lavage de laveur à air

(43) Veröffentlichungstag der Anmeldung: 23.09.1992
(73) Patentinhaber: Kessler & Luch GmbH, D-35394 Giessen 1 (DE)
(72) Erfinder: Jaeger, Erhard Willi, Prof. Dipl.-Ing., W-4020 Mettmann (DE); Müller, Günter, Dipl.-Ing., D-4100 Duisburg 1 (DE)
(74) Vertreter: Ackmann, Günther

(56) Entgegenhaltungen:
- DE-A- 2 444 819
- DE-A- 2 626 164
- DE-A- 2 841 662
- DE-A- 2 906 056
- DE-A- 3 105 172
- DE-A- 3 607 097

## Beschreibung

Die Erfindung betrifft ein Verfahren und eine Vorrichtung zur Regenerierung der Waschflüssigkeit eines Luftwäschers, durch den über Bearbeitungsmaschinen oder -geräten abgesaugte, mit aromatischen Schadstoffen beladene Luft zum Zwecke der Luftreinigung geleitet wird, wobei die Waschflüssigkeit aus einem Sammelbehälter im Kreislauf in den zu reinigenden Luftstrom gefördert wird.

Zahlreiche Bearbeitungsmaschinen oder -geräte emittieren aromatische Stoffe, wie Benzol, Toluol, Phenol, Xylol u. dgl., welche die Luft beladen. Aus Gründen des Umweltschutzes ist die verunreinigte Luft zu reinigen. Hierfür ist es bekannt, die Luft über dem Maschinen oder Geräten abzusaugen und durch einen Luftwäscher zu leiten, in den eine die Schadstoffe absorbierende Waschflüssigkeit, z. B. Wasser, das auch sauer oder basisch eingestellt sein kann, nach verschiedenen Methoden in feiner Verteilung eingebracht wird. Zur Optimierung der Reinigungswirkung ist es üblich, eine möglichst große Austauschfläche zwischen Gas- und Waschflüssigkeit zu schaffen (z. B. Füllkörperkolonnen, Sprühtürme, Venturiwäscher u. dgl.) und geeignete Strömungs- und Reaktionsverhältnisse einzustellen. Die mit den Stoffen beladene Waschflüssigkeit wird am Boden des Wäschers gesammelt und in der Regel erneut in den zu reinigenden Gasstrom eingebracht. Dabei reichert sich die Waschflüssigkeit fortlaufend mit den Stoffen an, so daß infolge einer zunehmenden Konzentration die Reinigungswirkung der Waschflüssigkeit abnimmt. Es ist deshalb bekannt die Waschflüssigkeit zu erneuern oder vor der erneuten Zuführung zu regenerieren. Die diskontinuierliche Regenerierungsmethode ist jedoch sehr aufwendig.

Anderseits werden Gaswäscher in verschiedenen chemischen Prozessanlagen verwendet. Mit dem Abtrennen von Schwefelwasserstoff und Kohlendioxid aus Gasströmen bei Crackprozessen mittels einer wäßrigen Absorptionslösung befaßt sich die DE-A-28 41 662. Dabei bilden sich die Vorrichtungen verschmutzende Polymere. Um diese aus der Waschflüssigkeit zu entfernen, wird die Absorptionslösung auf einen bestimmten pH-Bereich eingestellt und das Polymer mittels eines im Waschflüssigkeitsumlauf angeordneten Kohlefilters adsorbiert, während das von der Waschflüssigkeit absorbierte H₂S und CO₂ in einer nachgeordneten sogenannten Strippvorrichtung entfernt und die so regenerierte Waschflüssigkeit dem Absorber kreislaufartig wieder zugeführt wird. Zur Einstellung des pH-Wertes sieht eine Ausführungsform vor, von der kreislaufartig umlaufenden Waschflüssigkeit einen Teil abzuzweigen, in den Teilstrom das in der Strippvorrichtung freigesetzte saure Gas einzumischen und den Teilstrom dann zwecks Entfernung von Polymeren über einen Kohlefilter in den Absorber oder in den Hauptstrom zu leiten, über den die Waschflüssigkeit zu ihrer Regenerierung der Strippvorrichtung zugeführt wird. Die im Haupt- und Teilstrom vorgesehenen Kohlefilter haben mit der Abtrennung der von der Waschflüssigkeit absorbierten Gase H₂S und CO₂ nichts zu tun, sondern dienen ausschließlich der Entfernung von im System gebildeten Polymeren. Auch das in der DE-A-29 06 056 beschriebene Waschverfahren ist zum Auswaschen von H₂S bestimmt, wobei die Waschflüssigkeit Natriumkarbonat und Natriumvanadat enthält, welche das H₂S zu elementaren Schwefel oxidieren, das abgetrennt wird. Das Regenerieren der Waschflüssigkeit geschieht mit Hilfe des Natriumsalzes der Anthrachinondisulfonsäure, das durch Luftzumischung selbst wieder oxidiert wird. Bei diesem Verfahren kann durch Nebenreaktionen unerwünschtes Natriumthiosulfat und Natriumsulfat entstehen, das sich in der Waschflüssigkeit anreichert. Damit eine hinnehmbare Konzentration nicht überschritten wird, werden diese Salze ausgeschleust, indem ein Teilstrom der bereits regenerierten, das heißt von H₂S befreiten Waschflüssigkeit durch eine Adsorptionsanlage geleitet wird, welche das wertvolle Natriumsalz der Anthrachinondisulfonsäure zurückhält, jedoch die unerwünschten Sulfate durchläßt, die in einer Brennkammer abgebaut werden. Das im Adsorber zurückgehaltene Natriumsalz der Anthrachinondisulfonsäure wird durch Rückspülung gelöst und wieder der Waschflüssigkeit zugeführt. Bei diesem Verfahren dienen die Adsorber nur der Zwischenspeicherung eines der Waschflüssigkeit zugehörigen Reaktionsstoffes und der Abtrennung unerwünschter Nebenprodukte, nicht aber der eigentlichen Regenerierung der Waschflüssigkeit, die durch Luftzuführung in den Hauptstrom stattfindet. Die vorbekannten Waschverfahren sind in einer aufwendigen Weise auf das Auswaschen von H₂S bzw. CO₂ in großen Prozessanlagen abgestimmt und zur Reinigung von mit Schadstoffen beladener Luft, wie sie im Bereich von Bearbeitungsmaschinen und -geräten auftritt, ungeeignet.

Demgegenüber liegt der Erfindung die Aufgabe zugrunde, das dem Oberbegriff des Anspruches 1 entsprechende Verfahren derart weiterzubilden, daß eine kontinuierliche Regenerierung der mit den Schadstoffen angereicherten Waschflüssigkeit mit einfachen Einrichtungen erhalten wird.

Die Aufgabe wird durch die im Kennzeichen des Anspruches 1 aufgeführten Merkmale gelöst.

Dieses Verfahren hat den Vorteil, daß die Regenerierung der Waschflüssigkeit kontinuierlich abläuft, wobei jedoch lediglich eine solche Teilmenge regeneriert wird, wie es für eine befriedigende Reinigungswirkung erforderlich ist. Hierfür wird erfindungsgemäß die Stoffkonzentration der der Benetzungs- und Waschzone zugeführten Waschflüssigkeit ausreichend niedrig gehalten, um ein entsprechendes Absorptionspotential zur Verfügung zu haben. Es wird also lediglich eine solche Teilmenge durch die Aktivkohle geleitet, wie für den Benetzungs- und Waschvorgang benötigt wird. Diese Teilmenge wird vorzugsweise derart bemessen, daß die durch die Aktivkohle geleitete Waschflüssigkeit ein für den Waschprozess ausreichendes Absorptionspotential aufweist. Das kann beispielsweise durch Regelung mit Hilfe einer Konzentrationsmessung geschehen.

Zur Durchführung des Verfahrens ist ein Luftwäscher mit einer Benetzungseinrichtung, einem Sammelbehälter und einer Umlaufeinrichtung für die Waschflüssigkeit geeignet, deren mit einer Pumpe versehene Umlaufleitung am Sammelbehälter anschließt und in den Gas- oder Luftkanal mündet. Für die kontinuierliche Regenerierung der Waschflüssigkeit ist eine mit einer Aktivkohlesäule und einem Regelventil versehene Nebenleitung vorgesehen, die einerseits an die Umleitung anschließt und andererseits in die Benetzungszone des Gas- und Luftwäschers mündet. Die Regelung der Durchflußmenge in der Nebenleitung kann auf verschiedene Art und Weise geschehen. Es besteht die Möglichkeit dem Regelventil eine Regeleinrichtung zuzuordnen, die mit einem Meßgerät für die Konzentration der Waschflüssigkeit versehen ist. Es besteht aber auch die Möglichkeit andere Mengenregler zu verwenden. In Abhängigkeit von der Art der Stoffe, die von der Aktivkohle zurückgehalten werden sollen, kann eine Aktivkohlesäule vorgesehen sein oder es werden mehrere Aktivkohlesäulen in Reihe angeordnet. Auch können ein oder mehrere Aktivkohlesäulen katalytisch wirkende Aktivkohle enthalten.

Der Gegenstand der Erfindung ist in der Zeichnung beispielsweise dargestellt; es zeigt:
- Fig. 1: einen Gas- und Luftwäscher mit zugeordneter Regenerierungseinrichtung in einer schematischen Darstellung,
- Fig. 2: einen Gas- und Luftwäscher mit einem Venturirohr und zwei Aktivkohlesäulen und
- Fig. 3: einen Gas- und Luftwäscher mit Füllkörpern und zwei Aktivkohlesäulen.

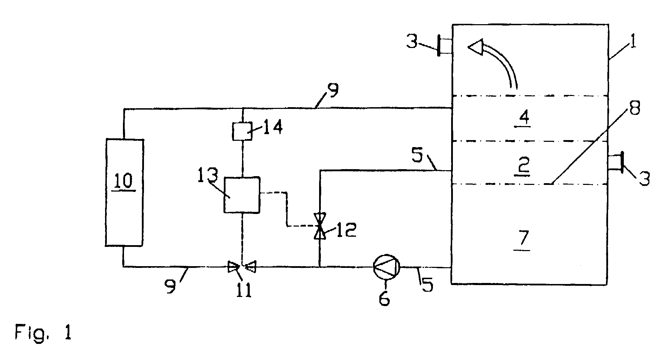

Der in Fig. 1 schematisch dargestellte Gas- und Luftwäscher 1 bildet im oberen Bereich einen Gas- und oder Luftkanal 2, der mittels eines Anschlußstutzens 3 an eine Gas- oder Luftabsaugeinrichtung angeschlossen ist. Im oberen Teil ist der Gas- und Luftwäscher mit einem Anschlußstutzen 3 für die Ableitung des gereinigten Gases bzw. der gereinigten Luft versehen.In dem Gas- oder Luftkanal 2 befindet sich eine Benetzungszone 4 in der in üblicher Weise eine große Austauschfläche zwischen Gas und Flüssigkeit geschaffen ist. Diese Austauschflächen können durch Füllkörperkolonnen gebildet sein. Weitere geeignete Mittel sind Sprühtürme, Venturirohre u. dgl. Am Boden des Gas- und Luftwäscher befindet sich ein Sammelbehälter 7 für Waschflüssigkeit, daß mittels einer Pumpe 6 durch eine Umlaufleitung 5 gefördert wird. Der Zulauf der Umlaufleitung 5 liegt etwas über der Flüssigkeitsoberfläche 8.

Zugeordnet ist dem Gas- und Luftwäscher 1 eine Regenerierungseinrichtung. Diese besteht aus einer mit einer Aktivkohlesäule 10 und einem Regelventil 11 versehene Nebenleitung 9, die einerseits an die Umleitung 5 anschließt und andererseits in die Benetzungs- und Waschzonen 4 des Gas- und Luftwäschers 1 mündet. Dem Regelventil 11 ist eine elektronische Regeleinrichtung 13 zugeordnet, die mit einem Meßgerät 14 zur Ermittlung der Konzentration der Waschflüssigkeit versehen ist.

Beim Betrieb des Gas- und Luftwäschers 1 wird die durch den Gas- oder Luftkanal 2 geführte Luft (Gas) von der Waschflüssigkeit beaufschlagt und gereinigt. Die Pumpe 6 bewirkt zunächst einen Umlauf der Waschflüssigkeit über die Umlaufleitung 5. Die Menge dieser Umlaufflüssigkeit wird durch das Regelventil 12 eingestellt, das ebenfalls von der elektronischen Regeleinrichtung 13 gesteuert wird. Beispielsweise kann die Umlaufmenge so eingestellt sein, daß während einer Betriebsschicht ein einmaliger Umlauf stattfindet. Bei üblich bemessenen Gas- und Luftwäschern kann die Flüssigkeitsmenge beispielsweise 2 bis 3 m³ betragen. Durch den Umlauf wird die im Sammelbehälter 7 befindliche Waschflüssigkeit ständig in Bewegung gehalten, um Konzentrationsunterschiede auszugleichen.

Über das Regelventil 11 wird eine Teilmenge der umlaufenden Waschflüssigkeit entnommen und über die Nebenleitung 9 der Aktivkohlesäule 10 aufgegeben. Die Aktivkohle regeneriert die Waschflüssigkeit, wobei einerseits die große Aktivoberfläche der Aktivkohle wirksam wird, aber auch bedarfsweise Aktivkohle mit einer katalytischen Wirkung Verwendung finden kann. Die regenerierte Waschflüssigkeit wird über die Nebenleitung 9 in die Benetzungs- und Waschzone 4 des Gas- und Luftwäschers 1 eingeführt, wo die intensive Berührung mit dem zu reinigenden Gas bzw. der zu reinigenden Luft stattfindet. Die Durchgangsgeschwindigkeit durch die Nebenleitung 9 wird mittels der Regeleinrichtung 13 eingestellt, welche eine Regelgröße von dem die Konzentration der Waschflüssigkeit ermittelnden Meßgerät 14 erhält.

Die Konzentration der Waschflüssigkeit kann beispielsweise durch eine pH-Messung, eine Leitfähigkeitsmessung, eine Trübemessung o. dgl. ermittelt werden.

Die Durchgangsgeschwindigkeit durch die Nebenleitung 9 und die Aktivkohlesäule 10 sowie die Menge an Aktivkohle sind so aufeinander abgestimmt, daß die dem Gas- und Luftwäscher 1 zugeführte Waschflüssigkeit ein ausreichendes Absorptionspotential aufweist. Für eine maximale Belüftung der Aktivkohle liegt die Durchgangsgeschwindigkeit beispielsweise unter 5 m/h. Dabei wird etwa die gesamte oder die halbe Menge der in einer Betriebsschicht umlaufenden Waschflüssigkeit durch die Nebenleitung geführt. In Abhängigkeit von der benötigten Regenerationsleistung kann eine Aktivkohlesäule ausreichen oder es können auch zwei oder mehrere Aktivkohlesäulen in Reihe bzw. parallel angeordnet sein.

Wenngleich in Fig. 1 die Nebenleitung 9 an die Umluftleitung 5 anschließt, besteht auch die Möglichkeit die Nebenleitung 9 unmittelbar am Sammelbehälter 7 anzuschließen und mit einer eigenen Förderpumpe zu versehen (in der Zeichnung nicht dargestellt).

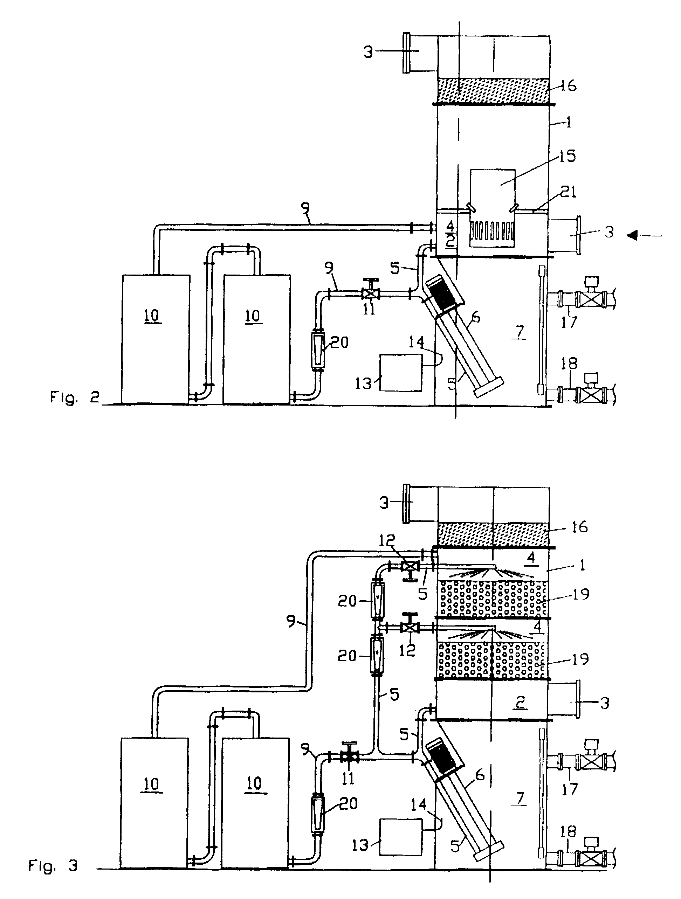

Fig. 2 zeigt ein Ausführungsbeispiel, bei dem der Gas- und Luftwäscher mit einem Venturirohr 15 versehen ist. Bei dieser Ausführung münden die Umlaufleitung 5 und die Nebenleitung 9 in die Benetzungszone 4. Die Waschflüssigkeit wird von dem spiralförmig strömenden Gas erfaßt, mitgerissen und in der Expansionszone fein verteilt. Der Gas- und Luftwäscher 1 ist im oberen Teil des Gas- oder Luftkanals 2 mit einem Tropfenabscheider versehen. Weiterhin ist im mittleren Bereich des Gas- oder Luftkanals 2 eine den Hochdruck vom Unterdruckbereich trennende Wand 21 vorhanden. Dem Sammelbehälter 7 ist ein Frischwasserzulauf 17 und ein Entleerungsrohr 18 zugeordnet. Außerdem ist in der Nebenleitung 9 ein Mengenregler 20 vorgesehen, der alternativ von der Regeleinrichtung 13 geregelt wird.

Die Fig. 3 zeigt einen Gas- und Luftwäscher der im Gas-oder Luftkanal 2 in zwei Etagen angeordnete Füllkörper 19 aufweist. Entsprechend sind mehrere Zuleitungen der Umlaufleitung 5 vorgesehen, wobei jede Etage eine eigene Zuleitung mit einem Regelventil 12 besitzt. Auch für diese Zuleitungen können Mengenregler 20 zum Einsatz gelangen.

## Patentansprüche

1. Verfahren zur Regenerierung der Waschflüssigkeit eines Luftwäschers, durch den über Bearbeitungsmaschinen oder -geräten abgesaugte, mit aromatischen Stoffen beladene Luft zum Zwecke der Luftreinigung geleitet wird, wobei die Waschflüssigkeit aus einem Sammelbehälter im Kreislauf in den zu reinigenden Luftstrom gefördert wird, dadurch gekennzeichnet, das eine solche Teilmenge der im Kreislauf geförderten Waschflüssigkeit durch Aktivkohle geleitet und in die Benetzungszone des Waschbehälters eingebracht wird, daß die der Benetzungs- und Waschzone zugeführte Waschflüssigkeit ein für den Waschprozess ausreichendes Absorptionspotential aufweist.

2. Verfahren nach Anspruch 1, dadurch gekennzeichnet, daß die Teilmenge mit Hilfe einer Konzentrationsmessung geregelt wird.

3. Luftwäscher zur Durchführung des Verfahrens nach Anspruch 1 oder 2, mit einer Benetzungseinrichtung (14), einem Sammelbehälter (7) und einer Umlaufeinrichtung für die Waschflüssigkeit, deren mit einer Pumpe (6) versehene Umlaufleitung (5) am Sammelbehälter (7) anschließt und in den Gas- oder Luftkanal (2) mündet, gekennzeichnet durch eine mit einer Aktivkohlesäule (10) und einem Regelventil (11) versehene Nebenleitung (9), die einerseits an die Umlaufleitung (5) anschließt und anderseits in die Benetzungszone (4) des Luftwäschers (1) mündet, wobei dem Regelventil (11) eine Regeleinrichtung (13) zugeordnet ist, die mit einem Meßgerät (14) für die Konzentration der Waschflüssigkeit versehen ist.

4. Luftwäscher nach Anspruch 3, dadurch gekennzeichnet, daß in der Nebenleitung (9) ein oder mehrere Aktivkohlesäulen (10) in Reihe angeordnet sind.

5. Luftwäscher nach Anspruch 3 oder 4, dadurch gekennzeichnet, daß ein oder mehrere Aktivkohlesäulen (10) katalytisch wirkende Aktivkohle enthalten.

## Claims

1. A process for the regeneration of the washing liquid of an air washer through which air is conveyed for air cleaning purposes, such air being suction-extracted through processing machinery or equipment and being laden with aromatic substances, the washing liquid being conveyed from a collecting tank in a circuit into the airstream for cleaning, characterised in that a quantity of the washing liquid conveyed in the circuit is passed through active carbon and introduced into the wetting zone of the wash tank, said partial quantity being such that the washing liquid fed to the wetting and washing zone has an absorption potential sufficient for the washing process.

2. A process according to claim 1, characterised in that the partial quantity is controlled by means of a concentration measurement.

3. An air washer for performing the process according to claim 1 or 2, comprising a wetting means (14), a collecting tank (7) and a circulating means for the washing liquid, the circulating pipe (5) thereof which has a pump (6) being connected to the collecting tank (7) and leading into the gas or air duct (2), characterised by a secondary pipe (9) provided with an active carbon column (10) and a control valve (11) and, on the one hand, connecting with the circulating pump (5) and, on the other hand, leading into the wetting zone (4) of the air washer (1), the control valve (11) having an associated control means (13) provided with a meter (14) for the washing liquid concentration.

4. An air washer according to claim 3, characterised in that the secondary pipe (9) contains one or more active carbon columns (10) in series.

5. An air washer according to claim 3 or 4, characterised in that one or more active carbon columns (10) contain catalytically acting active carbon.

## Revendications

1. Procédé de régénération du liquide de lavage d'un laveur d'air, dans lequel on fait circuler de l'air aspiré par des machines ou des appareils de traitement et chargé de substances aromatiques en vue de l'épurer, le liquide de lavage étant envoyé selon un circuit d'un réservoir au courant d'air devant être épuré, caractérisé par le fait qu'on fait passer à travers du charbon actif et qu'on introduit dans la zone de mouillage du récipient de lavage une quantité partielle telle du liquide de lavage passant dans le circuit, que le liquide de lavage envoyé à la zone de mouillage et de lavage ait un potentiel d'absorption qui est suffisant pour l'opération de lavage.

2. Procédé suivant la revendication 1, caractérisé par le fait que la quantité partielle est réglée à l'aide d'une mesure de la concentration.

3. Laveur d'air pour la mise en oeuvre du procédé suivant la revendication 1 ou 2, comportant un dispositif de mouillage (4), un réservoir (7) et un dispositif de recirculation du liquide de lavage, dont la conduite de recirculation (5) équipée d'une pompe (6) est raccordée au réservoir (7) et débouche dans le canal (2) de gaz ou d'air, caractérisé par une conduite secondaire (9), qui comporte une colonne de charbon actif (10) et une vanne de régulation (11) et qui d'une part est raccordée à la conduite de recirculation (5) et d'autre part débouche dans la zone de mouillage (4) du laveur d'air (1), un dispositif de régulation (13), qui est muni d'un appareil de mesure (14) servant à mesurer la concentration du liquide de lavage, étant associé à la vanne de régulation (11).

4. Laveur d'air suivant la revendication 3, caractérisé par le fait qu'une ou plusieurs colonnes de charbon actif (10) sont montées en série dans la conduite secondaire (9).

5. Laveur d'air suivant la revendication 34, caractérisé par le fait qu'une ou plusieurs colonnes de charbon actif (10) contiennent du charbon actif à action catalytique.
